# EUROPÄISCHE PATENTSCHRIFT

(11) **EP 0 674 246 B1**
(45) Veröffentlichungstag und Bekanntmachung des Hinweises auf die Patenterteilung: **06.05.1998**
(21) Anmeldenummer: 95101824.1
(22) Anmeldetag: 10.02.1995
(51) Int. Cl.: G03G 21/10, C08J 11/04, C08L 25/04

(54) **Recycling-Kunststofformmasse**
Synthetic moulding material from recycling
Matière synthétique moulable de recyclage

(30) Priorität: 18.02.1994 DE 4405256
(43) Veröffentlichungstag der Anmeldung: 27.09.1995
(73) Patentinhaber: Buna Sow Leuna Olefinverbund GmbH, 06258 Schkopau (DE)
(72) Erfinder: Schellenberg, Jürgen, Dr., D-06132 Halle (DE); Raatz, Günter, D-06124 Halle (DE); Hamann, Bernd, Dr., D-06124 Halle (DE); Kresak, Jürgen, D-16792 Zehdenick (DE); Mittelstaedt, Wilfried, D-14057 Berlin (DE)

(56) Entgegenhaltungen:
- DE-A- 3 118 608
- DE-A- 3 831 500
- PLASTE UND KAUTSCHUK, Jahrgang 40, Heft 7, August 1993 J. SCHELLENBERG et al. "Styrenpolymere als Binde- mittelharze fUr elektro- photographische Toner. Teil I" Seiten 225-230
- PLASTE UND KAUTSCHUK, Jahrgang 40, Heft 8, August 1993 J. SCHELLENBERG et al. "Styrenpolymere als Binde- mittelharze fUr elektro- photographische Toner. Teil II" Seiten 257-263

## Beschreibung

Die Erfindung betrifft eine Recycling-Kunststofformmasse zur Herstellung von Formkörpern durch die verschiedensten Verarbeitungsverfahren wie beispielsweise Spritzgießen.

Bei den verschiedenartigen elektrofotografischen Verfahren, die alle Druck- und Kopierverfahren zum Gegenstand haben, bei denen ein latentes elektrostatisches Ladungsbild auf einem Fotoleiter durch Belichtung erzeugt wird, erfolgt die Sichtbarmachung dieses latenten Ladungsbildes sowie die Übertragung und Fixierung auf dem Bildträger, beispielsweise Papier, häufig mittels elektrofotografischer Trockentoner. Diese Trockentoner stellen hinsichtlich beispielsweise des Fließverhaltens beim Aufschmelz- und Fixiervorgang, der Aufladung durch spezielle Ladungssteuerungsstoffe oder des Fließverhaltens des trockenen Tonerpulvers bei Raumtemperatur Pulver spezieller Korngrößenverteilung dar, die durch Oberflächenbeschichtung modifiziert und auf das spezielle elektrofotografische Verfahren detailliert abgestimmt sind.

Das Recycling von Abfällen solcher elektrofotografischer Trockentoner stößt auf große Schwierigkeiten.

So wird beispielsweise durch ein Wiederaufschmelzen solcher Abfälle das Fließverhalten der Toner beim Fixiervorgang. bedingt durch einen teilweisen thermischen Abbau des Tonerharzes wesentlich verändert, sowie die gewünschte hohe molekulare Uneinheitlichkeit des Tonerharzes stark herabgesetzt. Eine beispielsweise durch Oberflächenbeschichtung des Tonerpulvers erzeugte spezielle Aufladbarkeit oder gezielt eingestellte Fließfähigkeit des trockenen Tonerpulvers bei Raumtemperatur wird durch die Einarbeitung der Oberflächenbeschichtung in die Tonerpartikel völlig verändert.

Eine Verwendung von elektrofotografischen Trockentonern als Kunststofformmasse zur Herstellung von Formkörpern ist nicht möglich. Die eingesetzten Bindemittelharze weisen im allgemeinen bereits bei einer Temperatur von 150 °C und einer Belastung von 21,2 N Schmelzvolumenindices von ca. 2 bis 60 ml/10 min auf (J. Schellenberg, B. Hamann: Plaste und Kautschuk (1993)8, 257) und liegen damit weit außerhalb des üblichen Bereiches von Kunststofformmassen auf der Basis dieser Polymerisate. Außerdem führt die angestrebte gute Mahlbarkeit der Tonerharze zu hohen Anteilen niedermolekularer Polymerisate im Toner, die nur eine unzureichende mechanische Stabilität größerer Aggregate zulassen.

Der Erfindung liegt die Aufgabe zugrunde, das Recycling von elektrofotografischen Trockentonern in Kunststofformmassen zu ermöglichen.

Erfindungsgemäß enthält die Recycling-Kunststofformmasse
A) 1 bis 70 Masseprozent eines elektrofotografischen Trockentoners bestehend aus
   a) 35 bis 98 Masseprozent eines Bindemittelharzes auf der Grundlage eines Styrolcopolymers und
   b) 2 bis 65 Masseprozent weiterer üblicher Toneradditive
   und
B) 30 bis 99 Masseprozent eines Polymerisates bzw. Polymerisatgemisches auf der Grundlage von Styrol
sowie 0 bis 20 Teile, bezogen auf 100 Teile A und B, üblicher Kunststoff-Additive.

Das Polymerisat bzw. Polymerisatgemisch auf der Grundlage von Styrol kann erfindungsgemäß ein Polystyrol oder ein Pfropfcopolymerisat von Styrol auf ein Elastomer, insbesondere auf ein Polybutadien-Homo- oder Copolymerisat oder ein Polymerisatgemisch aus einem Elastomer und einem Polymerisat auf der Grundlage von Styrol sein. Als zusätzliche Komponente kann dieses Polymerisatgemisch auch Blockcopolymerisate enthalten oder beispielsweise aus
a) 1 bis 60 Masseprozent eines Elastomers, speziell eines Polybutadien-Homo- oder Copolymerisates, und
b) 40 bis 99 Masseprozent eines Polymerisates auf der Grundlage von Styrol
bestehen.

Die massenmittleren Molmassen, bezogen auf den Styrolanteil im Polymerisat bzw. Polymerisatgemisch liegen im Bereich 100 000 bis 1 000 000 g/mol.

Weiterhin kann gemäß der Erfindung für die Recycling-Kunststofformmasse als Polymerisat bzw. Polymerisatgemisch auf der Grundlage von Styrol auch ein Recycling-Produkt eingesetzt werden.

Die entwickelte Recycling-Kunststofformmasse zeichnet sich dadurch aus, daß ein Recycling von elektrofotografischen Tonern in Form einer Kunststofformmasse und daraus hergestellter Formteile möglich geworden ist. Insbesondere weist die Recycling-Kunststofformmasse eine sehr gute Fließfähigkeit bei hoher mechanischer Stabilität der daraus hergestellten Formteile im Vergleich zu üblichen Formmassen auf der Grundlage von Polymerisaten des Styrols auf.

Nachstehend wird die Erfindung an einigen ausgewählten Ausführungsbeispielen näher erläutert.

### Beispiele 1 bis 3

In den Beispielen 1 bis 3 wurden Mischungen aus einem Toner und einem Polymerisat auf der Grundlage von Styrol hergestellt und hinsichtlich ihrer Eigenschaften geprüft.

Als Toner fand ein Recycling-Trockentoner für elektrofotografische Verfahren mit einem Rußgehalt von 8 Masseprozent und einem Bindemittelharz auf der Grundlage eines Styrolcopolymers mit einem Styrolanteil von 90,5 Masseprozent Verwendung. Für das Polymerisat auf der Grundlage von Styrol wurde ein handelsübliches Polystyrol mit einer massenmittleren Molmasse von 250 000 g/mol, einem Elastanteil von 8,5 Masseprozent (als Polybutadien) und einem Schmelzindex von 5,5 g/10 min bei einer Temperatur von 200 °C und einer Belastung von 49 N eingesetzt. Es enthält 0,1 Masseprozent 2,6-Di-tert,-butyl-p-kresol als Stabilisator (übliches Kunststoff-Additiv).

Die Mischungsherstellung erfolgte auf einem Plasti-Corder durch Verkneten der Komponenten bei einer Temperatur von 180 °C über einen Zeitraum von 6 Minuten. Die Zusammensetzung der Mischungen geht aus der Tabelle 1 hervor.

Die Prüfung der erhaltenen Mischungen erfolgte durch Bestimmung des Fließverhaltens, der mechanischen Stabilität und der Mischungshomogenität. Das Fließverhalten wurde durch Ermittlung des Schmelzindex nach DIN 537 35 bei einer Temperatur von 200 °C und einer Belastung von 49 N beurteilt.

Die mechanische Stabilität wurde an durch Pressen aus den Mischungen hergestellten Preßplatten einer Größe von 80 mm x 80 mm und einer Dicke von 1 mm beurteilt. Die Mischungshomogenität wurde ebenfalls an den genannten Preßplatten durch visuelle Beurteilung festgestellt. Die Ergebnisse der Prüfungen sind in der Tabelle 2 zusammengefaßt.

### Beispiel 4 (Vergleichsbeispiel)

In diesem Beispiel wurde der Anteil des Recycling-Trockentoners an der Mischung gegenüber den Beispielen 1 bis 3 entsprechend den Angaben in der Tabelle 1 wesentlich erhöht. Die Herstellung der Mischung sowie die Prüfung erfolgte analog den Beispielen 1 bis 3.

Bei der Prüfung des Fließverhaltens der erhaltenen Formmasse mußte festgestellt werden, daß der Schmelzindex unter den üblichen Bedingungen aufgrund der sehr hohen Fließfähigkeit der Polymerschmelze nicht gemessen werden konnte. Obwohl die Mischungshomogenität der hergestellten Preßplatten positiv beurteilt wurde, war die mechanische Stabilität unzureichend, da die Preßplatten bereits manuell durch geringe Krafteinwirkung zerbrochen werden konnten.

Dieses Beispiel zeigt, daß bei nicht erfindungsgemäßem Vorgehen nur Mischungen erhalten werden, die die gewünschten positiven Eigenschaften der Recycling-Formmassen nicht aufweisen.

### Beispiel 5

Zur Ermittlung weiterer Eigenschaften der Recycling-Kunststofformmassen wurde eine Mischung auf einem Doppelschneckenkneter verarbeitet. Als Doppelschneckenkneter diente ein Meßextruder der Schneckenlänge 7 D. Die Mischung enthielt 30 Masseprozent des im Beispiel 1 angeführten Recycling- Trockentoners sowie 70 Masseprozent des im gleichen Beispiel eingesetzten Polystyrols. Die Verarbeitung erfolgte bei einer Temperatur von 180 ^{o}C. Aus dem erhaltenen Granulat der Formmasse wurden durch Spritzgießen problemlos Prüfkörper hergestellt, die bezüglich Schmelzindex, Schlag zähigkeit, Kerbschlagzähigkeit, Vicat-Erweichungstemperatur und Kugeldruckhärte geprüft wurden. Die Ergebnisse sind in der Tabelle 3 zusammengestellt.

### Beispiel 6 (Vergleichsbeispiel)

Ein handelsübliches Normalpolystyrol mit einer massenmittleren Molmasse von 450 000 g/mol wurde als Standard-Formmasse zur Verarbeitung im Spritzgießverfahren analog den Bedingungen des Beispiels 5 aufgearbeitet und die daraus hergestellten Prüfkörper den Prüfverfahren des Beispiels 5 unterzogen. Die Ergebnisse sind zum Vergleich mit denen der Recycling-Formmasse ebenfalls in der Tabelle 3 aufgeführt.

Es ist ersichtlich, daß die erfindungsgemäß hergestellte Recycling-Kunststofformmasse in ihren Eigenschaften denen von Standard-Formmassen auf der Grundlage von Polymerisaten des Styrols, die üblicherweise z. B. durch Spritzgießen verarbeitet werden, entspricht. Insbesondere zeichnet sich die Recycling-Kunststofformmasse durch eine sehr gute Fließfähigkeit bei hoher mechanischer Stabilität aus.

### Beispiel 7

In diesem Beispiel erfolgte die Herstellung der Recycling-Kunststofformmasse auf einem Zweischneckenkneter mit einem Schneckenaußendurchmesser von 30 mm bei einer Temperatur von 170 - 200 °C. Als Pfropfcopolymerisat des Styrols auf ein Polybutadienpolymerisat wurde ein handelsübliches Produkt mit einem Schmelzindex von 5,0 g/10 min bei einer Temperatur von 200 °C und einer Belastung von 49 N eingesetzt. Als Toner fand ein Recycling-Trockentoner für elektrofotografische Verfahren mit einem Rußgehalt von 4 Masseprozent, einem Bindemittelharz auf der Grundlage eines Styrolcopolymers mit einem Styrolanteil von 89,0 Masseprozent und einem Schmelzindex von 26,5 g/10 min bei einer Temperatur von 150 °C und einer Belastung von 21,2 N Verwendung.

Die Mischung enthielt 35 Masseprozent des Recycling-Trockentoners und 65 Masseprozent des angeführten Polystyrols. Die an den aus der erhaltenen Formmasse hergestellten Prüfkörpern ermittelten Eigenschaften sind in der Tabelle 3 zusammengestellt.

### Beispiel 8

Die Herstellung der Recycling-Kunststofformmasse erfolgte hier analog den Angaben in Beispiel 7 mit dem dort ebenfalls angeführten Recycling-Trockentoner. Im Gegensatz zu Beispiel 7 wurde jedoch ein Polymerisatgemisch auf der Grundlage von Styrol verwendet. Dieses Polymerisatgemisch stellt ein Recycling-Produkt dar, enthaltend 4 Masseprozent eines Polybutadien-Elastomers und 96 Masseprozent eines Polystyrols mit einem Schmelzindex von 10 g/10 min bei einer Temperatur von 200 °C und einer Belastung von 49 N.

Die zur Herstellung der Recycling-Kunststofformmasse bereitgestellte Mischung enthielt 25 Masseprozent des Recycling-Trockentoners und 75 Masseprozent des angeführten Recycling-Polymerisatgemisches.

Die Eigenschaften der Recycling-Kunststofformmasse sind ebenfalls in Tabelle 3 angegeben.

Aus den Beispielen 7 und 8 ist ebenfalls ersichtlich, daß erfindungsgemäß Recycling-Kunststofformmassen hergestellt werden können, die den üblicherweise verwendeten Formmassen entsprechen und sich insbesondere durch hohes Fließvermögen bei hoher mechanischer Stabilität auszeichnen.

**Tabelle 1**

| Mischungszusammensetzungen der Beispiele 1 bis 4 | | |
|---|---|---|
| Beispiel | Anteil des Recycling-Trockentoners (Masseprozent) | Anteil des Polystyrols (Masseprozent) |
| 1 | 10 | 90 |
| 2 | 30 | 70 |
| 3 | 50 | 50 |
| 4 | 80 | 20 |

**Tabelle 2**

| Ergebnisse der Prüfungen der Beispiele 1 bis 3 | | | |
|---|---|---|---|
| Beispiel | Schmelzindex (200 ^{o}C, 49 N) (g/10 min) | Mechanische Stabilität der Preßplatten | Mischungshomogenität |
| 1 | 10,0 | sehr gut | + |
| 2 | 21,3 | sehr gut | + |
| 3 | > 50 | gut | + |

**Tabelle 3**

| Eigenschaften der Formmassen aus den Beispielen 5 bis 8 | | | | | | |
|---|---|---|---|---|---|---|
| Eigenschaft | Prüfmethode | Einheit | Formmasse nach Beispiel5 | Formmasse nach Beispiel6 | Formmasse nach Beispiel7 | Formmasse nach Beispiel8 |
| Schmelzindex (200 ^{o}C, 49 N) | DIN 53 735 | g/10 min | 10,5 | 4 | 35,5 | 17,1 |
| Schlagzähigkeit | DIN 53 453 | kJ/m² | 24 | 22 | 18,1 | 15,1 |
| Kerbschlagzähigkeit | DIN 53 453 | kJ/m² | 1,7 | 1,0 | 1,7 | 1,8 |
| Vicat-Erweichungstemperatur | DIN 53 460 | ^{o}C | 95 | 93 | 79 | 88 |
| Kugeldruckhärte | DIN 53 456 | N/mm² | 113 | 146 | 119 | 151 |

## Patentansprüche

1. Recycling-Kunststofformmasse, enthaltend
A) 1 bis 70 Masseprozent eines elektrofotografischen Trockentoners bestehend aus
a) 35 bis 98 Masseprozent eines Bindemittelharzes auf der Grundlage eines Styrolcopolymers und
b) 2 bis 65 Masseprozent weiterer üblicher Toneradditive
und
B) 30 bis 99 Masseprozent eines Polymerisates bzw. Polymerisatgemisches auf der Grundlage von Styrol
sowie 0 bis 20 Teile, bezogen auf 100 Teile A und B, üblicher Kunststoff-Additive.

2. Recycling-Kunststofformmasse nach Anspruch 1, enthaltend als Polymerisat bzw. Polymerisatgemisch auf der Grundlage von Styrol ein Polystyrol.

3. Recycling-Kunststofformmasse nach Anspruch 1, enthaltend als Polymerisat bzw. Polymerisatgemisch ein Pfropfcopolymerisat von Styrol auf ein Elastomer.

4. Recycling-Kunststofformmasse nach Anspruch 1, enthaltend ein Polymerisatgemisch aus einem Elastomer und einem Polymerisat auf der Grundlage von Styrol.

5. Recycling-Kunststofformmasse nach Anspruch 1 und 4, enthaltend ein Polymerisatgemisch aus
a) 1 bis 60 Masseprozent eines Elastomers und
b) 40 bis 99 Masseprozent eines Polymerisates auf der Grundlage von Styrol.

6. Recycling-Kunststofformmasse nach Anspruch 1 bis 5, enthaltend als Polymerisat bzw. Polymerisatgemisch ein Pfropfcopolymerisat von Styrol auf ein Polybutadien-Homo- oder Copolymerisat.

7. Recycling-Kunststofformmasse nach Anspruch 1 bis 6, enthaltend ein Polymerisatgemisch aus einem Polybutadien-Homo- oder Copolymerisat und einem Polymerisat auf der Grundlage von Styrol.

8. Recycling-Kunststofformmasse nach Anspruch 1 bis 7, enthaltend ein Polymerisat bzw. Polymerisatgemisch auf der Grundlage von Styrol mit einer massenmittleren Molmasse, bezogen auf den Styrolanteil, von 100 000 bis 1 000 000 g/mol.

9. Recycling-Kunststofformmasse nach Anspruch 1 bis 8, enthaltend als Polymerisat bzw. Polymerisatgemisch auf der Grundlage von Styrol ein Recycling-Produkt.

## Claims

1. Recycling plastic moulding compound, containing
A) 1 to 70 percent by weight of an electrophotographic dry toner consisting of
a) 35 to 98 percent by weight of a binding agent resin on the basis of a styrene copolymer and
b) 2 to 65 percent by weight of the other usual toner additives
and
B) 30 to 99 percent by weight of a polymer or polymer blend on the basis of styrene
as well as 0 to 20 parts, with reference to 100 parts of A and B of the usual plastic additives.

2. Recycling plastic moulding compound according to claim 1, containing a polystyrene as a polymer or polymer blend on the basis of styrene.

3. Recycling plastic moulding compound according to claim 1, containing a graft copolymer of styrene on an elastomer as a polymer or polymer blend.

4. Recycling plastic moulding compound according to claim 1, containing a polymer blend of an elastomer and a polymer on the basis of styrene.

5. Recycling plastic moulding compound according to claims 1 and 4, containing a polymer blend of
a) 1 to 60 percent by weight of an elastomer and
b) 40 to 99 percent by weight of a polymer on the basis of styrene.

6. Recycling plastic moulding compound according to claims 1 to 5, containing a graft copolymer of styrene on polybutadiene homopolymer or polybutadiene copolymer as a polymer or polymer blend.

7. Recycling plastic moulding compound according to claims 1 to 6, containing a polymer blend of a polybutadiene homopolymer or polybutadiene copolymer and a polymer on the basis of styrene.

8. Recycling plastic moulding compound according to claims 1 to 7, containing a polymer or polymer blend on the basis of styrene with a weight-average molecular weight, with reference to the styrene component, from 100,000 to 1,000,000 g/mol.

9. Recycling plastic moulding compound according to claims 1 to 8, containing a recycling product as a polymer or polymer blend on the basis of styrene.

## Revendications

1. Matière plastique à mouler de recyclage contenant
A) un pourcentage en poids de 1 à 70 d'un toner électrophotographique sec constitué
a) d'un pourcentage en poids de 35 à 98 de liant sous forme de résine à la base d'un copolymère styrène
b) d'un pourcentage en poids de 2 à 65 d'autres additifs toners usuels
et
B) un pourcentage en poids de 30 à 99 d'un polymérisat ou mélange de polymérisats à base de styrène
ainsi que de 0 à 20 parts, rapportées à 100 parts A et B, d'additifs plastiques usuels.

2. Matière plastique à mouler de recyclage selon la spécification 1, contenant un polystyrène comme polymérisat ou mélange de polymérisats à base de styrène.

3. Matière plastique à mouler de recyclage selon la spécification 1, contenant un copolymère greffé de styrène sur un élastomère comme polymérisat ou mélange de polymérisats.

4. Matière plastique à mouler de recyclage selon la spécification 1, contenant un mélange de polymérisats d'un élastomère et un polymérisat à la base de styrène.

5. Matière plastique à mouler de recyclage selon les spécifications 1 et 4, contenant un mélange de polymérisats à partir
a) d'un pourcentage en poids de 1 à 60 d'un élastomère et
b) d'un pourcentage en poids de 40 à 99 d'un polymérisat à base de styrène.

6. Matière plastique à mouler de recyclage selon les spécifications de 1 à 5, contenant un copolymère greffé de styrène sur un homopolymérisat ou copolymérisat de polybutadiène comme polymérisat ou mélange de polymérisats.

7. Matière plastique à mouler de recyclage selon les spécifications de 1 à 6, contenant un mélange de polymérisats à partir d'un homopolymérisat ou copolymérisat de polybutadiène ou d'un polymérisat à la base de styrène.

8. Matière plastique à mouler de recyclage selon les spécifications de 1 à 7, contenant un polymérisat ou mélange de polymérisats à la base de styrène d'un poids molaire moyen de la matière rapporté à une part de styrène de 100 000 à 1 000 000 g/mol.

9. Matière plastique à mouler de recyclage selon les spécifications de 1 à 8, contenant un produit de recyclage comme polymérisat ou mélange de polymérisats à la base de styrène.
